# EUROPEAN PATENT SPECIFICATION

(11) **EP 3 974 588 B1**
(45) Date of publication and mention of the grant of the patent: **05.11.2025**
(21) Application number: 21198886.0
(22) Date of filing: 24.09.2021
(51) Int. Cl.: E03B 7/09, E03C 1/02, E04F 19/08, F24D 19/00

(54) **RECESSABLE BOX FOR HOUSING HYDRAULIC COMPONENTS**
EINBAUKASTEN ZUR AUFNAHME VON HYDRAULIKKOMPONENTEN
BOÎTE ENCASTRABLE POUR BOÎTIER DE COMPOSANTS HYDRAULIQUES

(30) Priority: 25.09.2020 IT 202000022721
(43) Date of publication of application: 30.03.2022
(73) Proprietor: R.B.M. S.p.A., 25060 Polaveno (BS) (IT)
(72) Inventor: BOSSINI, Guido, 25075 NAVE (BS) (IT)
(74) Representative: Studio Torta S.p.A.

(56) References cited:
- EP-A1- 2 896 756
- EP-A1- 3 524 738
- DE-U1- 29 910 567
- DE-U1- 9 410 742

## Description

### CROSS-REFERENCE TO RELATED APPLICATIONS

This patent application claims priority from Italian patent application no. 102020000022721 filed on September 25, 2020.

### TECHNICAL FIELD

The invention relates to a recessable box for housing hydraulic components, in particular components of a heating or sanitary system, such as manifolds, valves and the like.

### BACKGROUND ART

Boxes of the aforesaid type are known, which comprise a box-shaped body, which is open at the front and is suited to be housed and fixed in a dedicated cavity obtained in the wall, and a front closing plate. The plate is generally mounted in contact with the wall, so as frontally close the body and adhere to the wall around the cavity. This type of box is generally used for installations in solid walls, where the cavity is obtained through local demolition of the wall itself and it is not possible or practical to control dimensions in a precise manner. The plate projects relative to the plane of the wall and overlaps the edges of the cavity, thus blocking the view thereof.

DE 94 10 742 U1 discloses a recessable box comprising a frontally open box body, a slide telescopically coupled to the box body so as to be slidable in a direction perpendicular to the wall, and a frame securable to the slide and defining a seat for a front closure plate. The frame projects relative to the plane of the wall and overlaps the edges of the cavity.

In situations in which this solution is not acceptable or welcome from an aesthetic point of view and mainly in the presence of plasterboard walls, the plate is replaced by a flush-mounted trap door fitted in an opening with predetermined dimensions obtained in the wall. This solution is expensive both in terms of box manufacturing costs and in terms of installation costs.

### DISCLOSURE OF INVENTION

The object of the invention is to provide a recessable box that is capable of solving the above-mentioned problems.

The aforesaid object is reached by a flush-mounted box for housing hydraulic components as claimed in claim 1. Thanks to this invention, a box with a front closing plate flush with the wall is provided in a simple and economic fashion, significantly reducing the manual activities required both to produce it and to install it.

Also, the closure plate is placed in its seat in a precise, though easily removable manner.

The stop elements can be integral to the frame or to the slide; in this case, no additional components are needed.

Alternatively, the stop elements can be small plates fixed to the frame and/or to the slide.

Preferably, the frame has, along each side, an L-shaped cross-section defined by a flange, which is parallel to a bottom wall of the body and is suited to match a corresponding flange of the slide, and by a guide wall delimiting the seat.

Preferably, the frame is made from a folded sheet metal strip and is open along one of its corners. This avoids the production of large off-cuts.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
figure 1 is a perspective view of a recessable box according to the invention;
figure 2 is a perspective view of the box of figure 1;
figure 3 is a perspective view of a first embodiment of a detail of the box of figure 1;
figure 4 is a cross-section of the detail of figure 3;
figure 5 is a perspective view of a second embodiment of the detail of figure 3; and
figure 6 is a cross-section of the detail of figure 5.

### BEST MODE FOR CARRYING OUT THE INVENTION

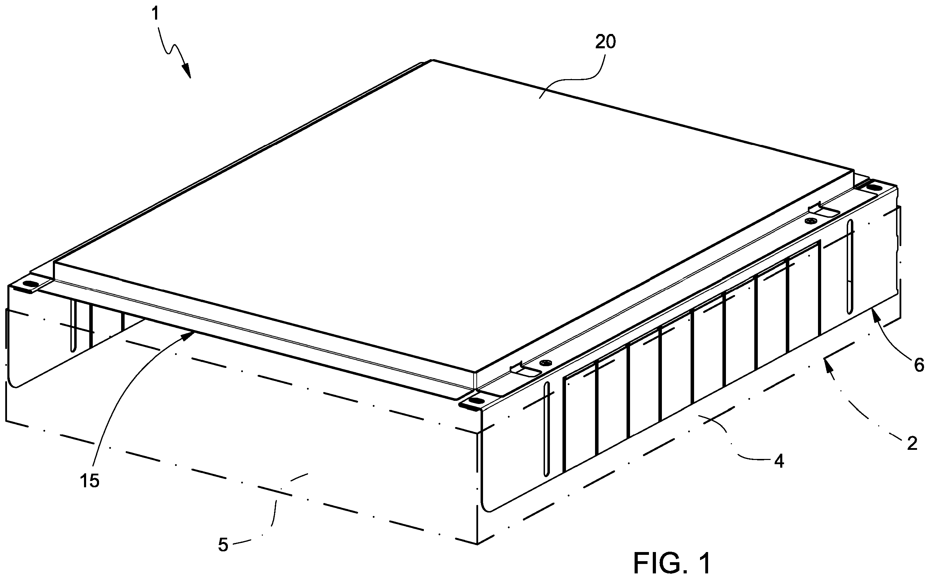

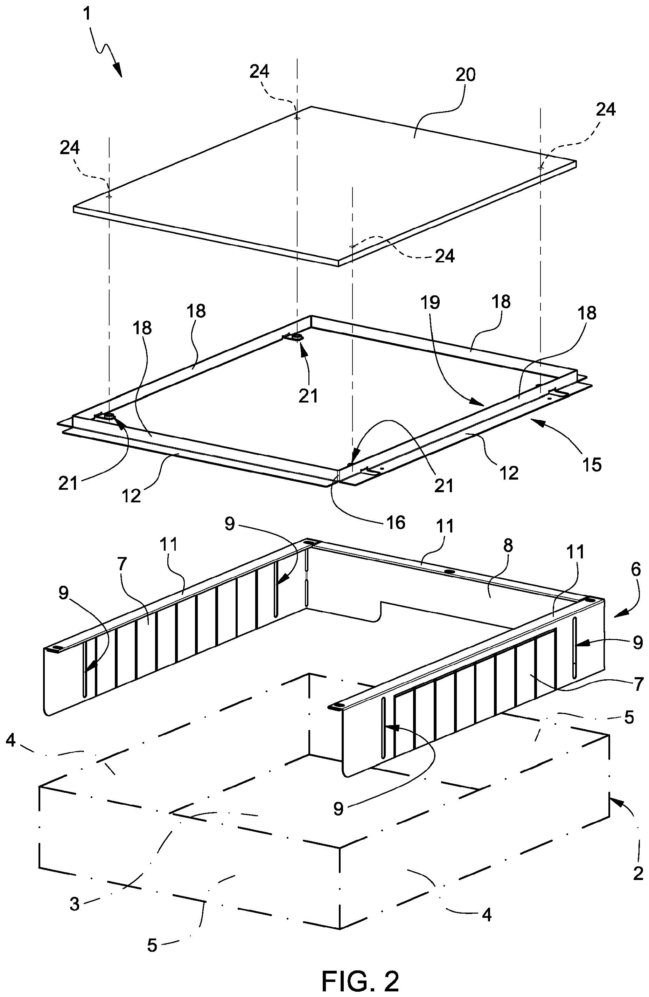

With reference to figures 1 and 2, number 1 indicates, as a whole, a recessable box for housing hydraulic components according to the invention.

The box 1 comprises a box-shaped body 2 with a parallelepiped-like shape, which is open at the front and comprises a rectangular bottom wall 3, two longitudinal lateral walls 4 and two transverse lateral walls 5 extending perpendicularly to the bottom wall 3.

The box 1 further comprises a slide 6 made up of two longitudinal walls 7 and a transverse wall 8, which are telescopically coupled to the corresponding lateral walls 4, 5 so that they can slide relative to them in a direction that is perpendicular to the bottom wall 3 (namely, perpendicularly to the wall in which the box is recessed), thus changing the overall thickness of the box 1. To this aim, the longitudinal walls 7 of the slide have respective pairs of slits 9, through which respective locking screws (not shown) are mounted in a through manner so as to lock them to the longitudinal walls 4 of the body 2.

The walls 7, 8 of the slide 6 are provided with respective front flanges 11 bent inwards.

The box 1 further comprises a rectangular frame 15 arranged on a plane parallel to the bottom wall 3 and suited to be frontally connected to the slide 6.

More in particular, the frame 15 is made from a folded sheet metal strip and is open along a corner 16 of its. This avoids the production of large off-cuts, which would be produced if the frame were manufactured starting from a rectangular plate.

The frame 15 has, along each side, an L-shaped cross-section defined by a flange 12, which is parallel to the bottom wall 3 of the body 2 and is suited to match a corresponding flange 11 of the slide 6, and by a guide wall 18 extending parallel to the axis A on the opposite side relative to the slide 6.

The guide walls 18 define a rectangular seat 19 for a closing plate 20, which rests against a plurality of stop elements 21 arranged inside the frame 15, along two opposite main sides thereof and close to the corners of the frame 15.

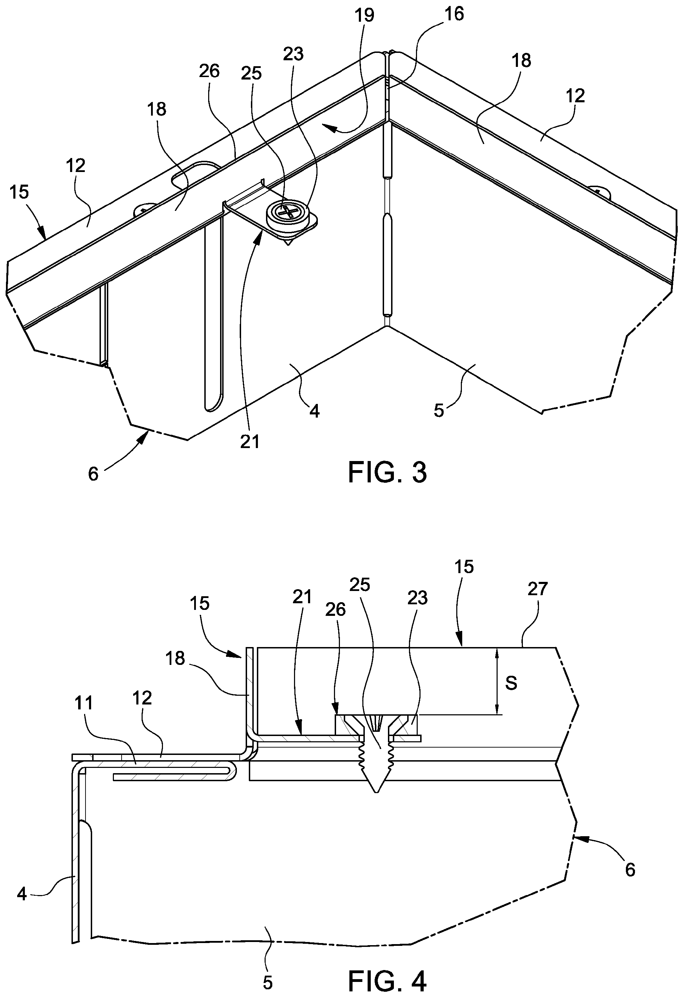

In the embodiment shown in figures 3 and 4, the stop elements 21 are integral to the frame 15. In particular, they consists of portions that are cut out from the flanges 12 and bent at 180° towards the inside of the frame 15.

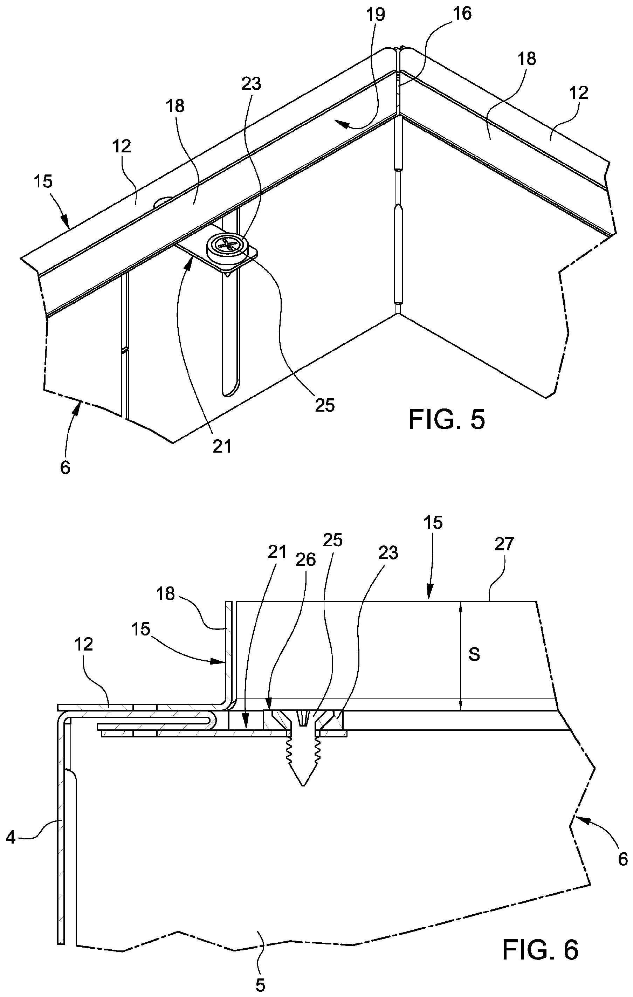

In the embodiment shown in figures 5 and 6, the stop elements 21 are small sheet metal plates fixed to the frame 15 and/or to the slide 6 through screws 22.

In both embodiments, the stop elements 21 carry respective magnets 23, which are suited to cooperate with corresponding ferromagnetic elements 24 carried by the closing plate 20.

The magnets 23, for example in the form of cylindrical "pills" fixed by means of respective screws 25 to the respective stop elements 21, have respective front surfaces 26 to support the plate 20.

The thickness of the plate 20 conveniently is equal to the distance s, measured in a direction perpendicular to the bottom wall 3 of the body 2, between the front surfaces 26 of the magnetic elements 23 and a front edge 27 of the guide walls 18 (figures 4 and 6). The plate 20 can consist of a panel made of a high-stiffness plastic material, such as an expanded PVC of the type available in the market with the commercial name of Forex^{®}. Based on the comparison between figures 4 and 6, the solution of figures 3 and 4 requires a panel 20 with a smaller thickness than the solution of figures 5 and 6.

The installation of the box 1, which already is partly evident from the description above, is the following.

The box 1 is housed in a suitable cavity made in a wall; the body 2 is fixed inside the cavity, for example by means of screw anchors. The position of the slide 6 is adjusted so that the front edge 26 of the guide walls 18 of the frame 15 is flush with the wall.

Finally, once the installation of the hydraulic components inside the box 1 is complete, the box can be closed at the front by the plate 20, which is flush with the wall.

Finally, the frame 1 can be subjected to changes and variants, which do not go beyond the scope of protection of the invention.

In particular, the stop elements 21 can be manufactured in a different manner; for example, they can be integral to the slide 6. The magnets 23 can be arranged on the front closing plate 20 and directly interact with the stop elements 21, if they are electromagnetic, or with ferromagnetic elements carried by them.

## Claims

1. Recessable box for housing hydraulic components including a frontally open box body (2) configured to be housed and fixed in a cavity made in a wall, a slide (6) telescopically coupled to the body (2) so as to be slidable with respect to the body in a direction perpendicular to the wall, a frame (15) securable to the slide (6) and defining a seat, and a front closure plate (20) configured to be housed in the seat, the position of the slide (6) being adjustable so as to arrange the front closure plate (20) flush with the wall; the recessable box further including a number of stop elements (21) for supporting the front closure plate (20) within the seat, the recessable box further including magnetic means (23, 24) for connecting the front closure plate (20) to the stop elements (21).

2. A box as claimed in claim 1, wherein the stop elements (21) are integral to the frame (15).

3. A box as claimed in claim 1, wherein the stop elements (21) are integral to the slide (6).

4. A box as claimed in claim 1, wherein the stop elements (21) are plates fixed to the frame (15) and/or to the slide (6).

5. A box as claimed in any of the above claims, wherein the frame (15) has, along each side, an L-shaped cross-section defined by a flange (16) parallel to a back wall (3) of the body (2) and matching a corresponding flange (11) of the slide (6), and a guide wall (18) delimiting the seat (19) .

6. A box as claimed in any of the previous claims, wherein the frame (15) is made from a folded sheet metal strip and is open along one of its corners.

## Patentansprüche

1. Einbaubarer Kasten zum Aufnehmen von Hydraulikkomponenten, einschließlich eines stirnseitig offenen Kastenkörpers (2), der konfiguriert ist, um in einem in einer Wand ausgebildeten Hohlraum aufgenommen und befestigt zu werden, eines Schlittens (6), der teleskopartig mit dem Körper (2) gekoppelt ist, um in Bezug auf den Körper in einer Richtung senkrecht zur Wand verschiebbar zu sein, eines Rahmens (15), der an dem Schlitten (6) befestigbar ist und einen Sitz definiert, und einer vorderen Verschlussplatte (20), die konfiguriert ist, um in dem Sitz aufgenommen zu werden, wobei die Position des Schlittens (6) einstellbar ist, um die vordere Verschlussplatte (20) bündig mit der Wand anzuordnen; wobei der einbaubare Kasten ferner eine Anzahl von Anschlagelementen (21) zum Stützen der vorderen Verschlussplatte (20) innerhalb des Sitzes einschließt, wobei der einbaubare Kasten ferner magnetische Mittel (23, 24) zum Verbinden der vorderen Verschlussplatte (20) mit den Anschlagelementen (21) umfasst.

2. Kasten nach Anspruch 1, wobei die Anschlagelemente (21) einstückig mit dem Rahmen (15) ausgebildet sind.

3. Kasten nach Anspruch 1, wobei die Anschlagelemente (21) einstückig mit dem Schlitten (6) ausgebildet sind.

4. Kasten nach Anspruch 1, wobei die Anschlagelemente (21) Platten sind, die am Rahmen (15) und/oder am Schlitten (6) befestigt sind.

5. Kasten nach einem der vorstehenden Ansprüche, wobei der Rahmen (15) entlang jeder Seite einen L-förmigen Querschnitt aufweist, der durch einen Flansch (16), der parallel zu einer Rückwand (3) des Körpers (2) verläuft und zu einem entsprechenden Flansch (11) des Schlittens (6) passt, und eine Führungswand (18), die den Sitz (19) begrenzt, definiert ist.

6. Kasten nach einem der vorhergehenden Ansprüche, wobei der Rahmen (15) aus einem gefalteten Blechstreifen besteht und entlang einer seiner Ecken offen ist.

## Revendications

1. Boîte encastrable pour le logement de composants hydrauliques comprenant un corps (2) de boîte ouvert à l'avant, configuré pour être logé et fixé dans une cavité pratiquée dans un mur, une glissière (6) couplée de manière télescopique au corps (2) de manière à pouvoir coulisser par rapport au corps dans une direction perpendiculaire au mur, un cadre (15) pouvant être fixé à la glissière (6) et définissant un siège, et une plaque de fermeture frontale (20) configurée pour être logée dans le siège, la position de la glissière (6) étant réglable de manière à placer la plaque de fermeture avant (20) au même niveau que le mur ; la boîte encastrable comprenant en outre un certain nombre d'éléments d'arrêt (21) pour supporter la plaque de fermeture avant (20) dans le siège, la boîte encastrable comprenant en outre des moyens magnétiques (23, 24) pour relier la plaque de fermeture avant (20) aux éléments d'arrêt (21).

2. Boîte selon la revendication 1, les éléments d'arrêt (21) étant solidaires du cadre (15).

3. Boîte selon la revendication 1, les éléments d'arrêt (21) étant solidaires de la glissière (6).

4. Boîte selon la revendication 1, les éléments d'arrêt (21) étant des plaques fixées au cadre (15) et/ou à la glissière (6).

5. Boîte selon l'une quelconque des revendications précédentes, le cadre (15) présentant, de chaque côté, une section transversale en L définie par une bride (16) parallèle à une paroi arrière (3) du corps (2) et correspondant à une bride correspondante (11) de la glissière (6), et par une paroi de guidage (18) délimitant le siège (19).

6. Boîte selon l'une quelconque des revendications précédentes, le cadre (15) étant constitué d'une bande de tôle pliée et étant ouvert le long de l'un de ses coins.
